# EUROPÄISCHE PATENTSCHRIFT

(11) **EP 0 354 450 B1**
(45) Veröffentlichungstag und Bekanntmachung des Hinweises auf die Patenterteilung: **27.10.1993**
(21) Anmeldenummer: 89114212.7
(22) Anmeldetag: 01.08.1989
(51) Int. Cl.: H02J 9/06

(54) **Schaltungsanordnung zur wahlweisen Speisung eines Verbrauchers mittels einer von zwei Speiseschaltungen**
Circuit arrangement for selectively feeding a user by means of one of two feeding circuits
Agencement de circuit pour alimenter sélectivement un utilisateur depuis une source parmi deux

(30) Priorität: 10.08.1988 DE 3827166
(43) Veröffentlichungstag der Anmeldung: 14.02.1990
(73) Patentinhaber: SIEMENS AKTIENGESELLSCHAFT, 80333 München (DE)
(72) Erfinder: Wagner, German, D-8061 Hebertshausen (DE)

(56) Entgegenhaltungen:
- EP-A- 0 170 916
- EP-A- 0 177 779
- DE-A- 3 429 572
- US-A- 4 492 876
- US-A- 4 659 942

## Beschreibung

Die Erfindung bezieht sich auf eine wie im Oberbegriff des Patenanspruchs 1 angegebene Schaltungsanordnung zur wahlweisen Speisung eines Verbrauchers mittels einer von zwei Speiseschaltungen.

Eine derartige Schaltungsanordnung ist bereits aus der US 4,492,876 bekannt. Bei der bekannten Schaltungsanordnung sind zur Speisung eines Verbrauchers mit einer Gleichspannung zwei Speiseschaltungen vorgesehen. Eine der beiden Speiseschaltungen übernimmt als Betriebsspannungsquelle im normalen Betriebszustand die Speisung des Verbrauchers. Die weitere Speiseschaltung übernimmt die Speisung, sobald die von der Betriebsspannungsquelle gelieferte Spannung einen vorgegebenen Wert unterschreitet. Beide Speiseschaltungen liefern Gleichspannungen gleicher Polarität und sind über je einen als Schalter dienenden Feldeffekttransistor an den Verbraucher geführt. Die beiden Feldeffekttransistoren sind vom selbstsperrenden Typ. Der Feldeffekttransitor liegt jeweils mit seiner Drain-Sourcestrecke im einen Speisestrompfad und die Gate-Elektrode des Feldeffekttransistors ist jeweils über einen Widerstandsstromzweig an den anderen Speisestrompfad geführt. Der Widerstandsstromzweig der Betriebsspannungsquelle enthält einen als Schalter dienenden Feldeffekttransistor, der bei aktiver Ersatzspannungsquelle gesperrt und bei passiver Ersatzspannungsquelle leitend ist.

Ferner ist aus der EP 0 170 916 A1 eine Schaltungsanordnung bekannt, bei der ein Verbraucher wahlweise mit einer von zwei Gleichspannungen entgegengesetzer Polarität gespeist wird. Die beiden Speiseschaltungen, die die Gleichspannungen entgegengesetzter Polarität erzeugen, sind über je eine Schaltvorrichtung an den Verbraucher geführt. Von beiden Speiseschaltungen befindet sich jeweils nur eine im aktiven Zustand. Die beiden Schaltvorrichtungen enthalten jeweils in einem Speisestrompfad einen Feldeffekttransistor vom selbstsperrenden Typ, dessen Gateelektrode über einen Widerstandsstromzweig an den anderen Speisestrompfad geführt ist. Auf diese Weise wird erreicht, daß die am Verbraucher wirksame Verbraucherspannung die Schaltvorrichtung, die der nicht aktiven Speiseschaltung zugeordnet ist, in den gesperrten Zustand steuert. Für die Funktion der bekannten Schaltungsanordnung ist wesentlich, daß es sich bei den beiden Speisespannungen um Spannungen entgegengesetzter Polarität handelt. Von den beiden Speiseschaltungen ist die eine eine Quelle eingeprägten Stromes und die andere eine Konstantspannungsquelle. Die beiden Schaltvorrichtungen bewirken, daß der Verbraucher wahlweise mit einem eingeprägten Speisestrom oder mit einer eingeprägten Prüfspannung entgegengesetzter Polarität beaufschlagt wird.

Aufgabe der Erfindung ist es, eine wie im Oberbegriff des Patentanspruchs 1 angegebene Schaltungsanorndung derart auszubilden, daß sie auf einfache Weise realisiert werden kann und daß zugleich der von der Ersatzspannungsquelle abgegebene Strom begrenzt wird. Außerdem soll der Ersatzspannungsquelle im Bereitschaftszustand keine Leistung entnommen werden.

Gemäß der Erfindung wird die Schaltungsanordnung zur Lösung dieser Aufgabe in der im kennzeichnenden Teil des Patentanspruchs 1 angegebenen Weise ausgebildet. Dabei kann der im Widerstandsstromzweig angeordnete Schalter ein Kontakt eines Relais sein, das in Abhängigkeit vom Betriebszustand der Betriebsspannungsquelle erregt oder nicht erregt ist. Anstelle des Relais kann gegebenenfalls ein Optokoppler, ein Transistor oder dergleichen Verwendung finden.

Aus dem Buch von U. Tietze und Ch. Schenk: "Halbleiterschaltungstechnik, 4. Auflage, Springer-Verlag, Seiten 53 und 54 ist bereits eine Schaltungsanordnung mit einem Transistor als Konstantstromquelle bekannt, bei der der Transistor mit seinem Emitter über einen ersten und mit seiner Basis über einen zweiten Widerstand an ein Bezugspotential geführt ist. Eine wahlweise Speisung eines Verbrauchers aus einer von zwei Speisequellen ist dabei nicht vorgesehen.

Durch die erfindungsgemäßen Maßnahmen ergibt sich der Vorteil, daß die Schaltvorrichtung, die der als Ersatzspannungsquelle dienenden Speiseschaltung nachgeschaltet ist, zugleich eine Strombegrenzung bewirkt, so daß die Ersatzspannungsquelle ohne eigene Vorrichtung zur Strombegrenzung auskommt und daher auf besonders einfache Weise realisiert werden kann.

Die Weiterbildung der Erfindung nach Anspruch 2 hat den Vorteil, daß die Schaltungsanordnung bei Speisung des Verbrauchers aus der Ersatzspannungsquelle zugleich eine Begrenzung der Verbraucherspannung bewirkt, so daß die Ersatzspannungsquelle auch keine Vorrichtung zur Regelung und/oder Begrenzung der Spannung zu enthalten braucht.

Bei der Weiterbildung der Erfindung nach Anspruch 3 kann der an den Eingang der als Betriebsspannung dienenden Speiseschaltung angeschlossene Spannungssensor insbesondere ein Relais, ein Optokoppler, ein Transistor oder dergleichen sein. Dabei wird die Rückwirkungsfreiheit der der Betriebsspannung dienenden Speiseschaltung zugleich zur Entkopplung des Spannungssensors vom Ausgang der Schaltvorrichtung ausgenutzt.

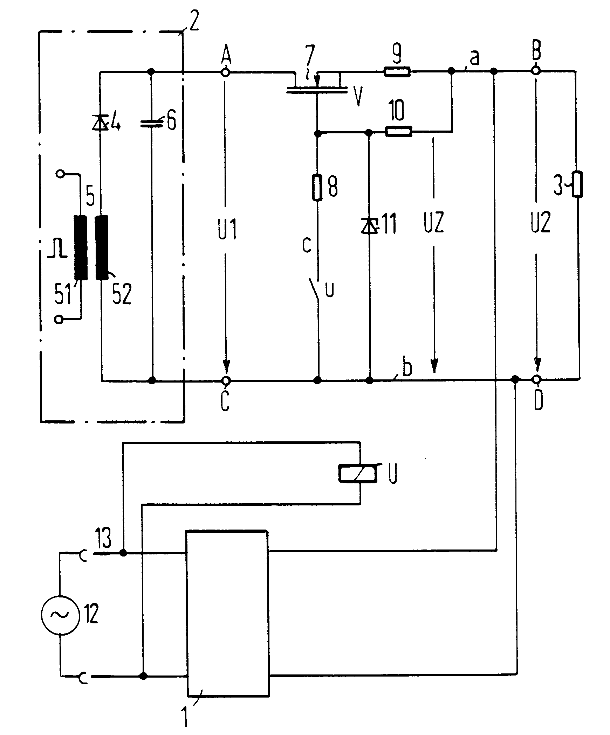

Die Figur zeigt eine Schaltungsanordnung zur wahlweisen Speisung eines Verbrauchers aus einer von zwei Speiseschaltungen.

Die Figur zeigt eine Schaltungsanordnung zur wahlweisen Speisung des Verbrauchers 3 mittels einer der beiden Speiseschaltungen 1 und 2.

Die Speiseschaltung 1 läßt sich über den Steckverbinder 13, der zwischen der Wechselspannungsquelle 12 und dem Eingang der Speiseschaltung 1 angeordnet ist, an Wechselspannung legen. Der Ausgang der als Betriebseinheit dienenden Speiseschaltung 1 ist direkt mit dem Verbraucher 3 verbunden. Bei aktiver Speiseschaltung 1 übernimmt diese daher als Betriebseinheit die Speisung des Verbrauchers 3.

Als Ersatzeinheit dient die Speiseschaltung 2. Die Speiseschaltung 2 ist ständig aktiv bzw. in Bereitschaft. Zwischen der Speiseschaltung 2 und dem Verbraucher 3 ist ein Schaltvorrichtung angeordnet, die den Ausgang der Speiseschaltung 2 nur dann mit dem Verbraucher 3 verbindet, wenn die Speiseschaltung 1 nicht aktiv ist.

Der Ausgang der Speiseschaltung 2 hat die Anschlüsse A und C. Die Anschlüsse des Verbrauchers 3 sind mit B und D bezeichnet. Die Anschlüsse A und B sind über den Speisestrompfad a miteinander verbunden, in dem eine aus der Drain-Source-Strecke des Feldeffekttransistors 7 und dem Widerstand 9 bestehende Serienschaltung liegt. Der Widerstand 9 liegt dabei zwischen der Source-Elektrode des Feldeffekttransistors 7 und dem Anschluß B des Verbrauchers. Die Anschlüsse C und D sind über den Speisestrompfad b unmittelbar miteinander verbunden. Der Feldeffekttransistor 7 ist vom Verarmungstyp, d. h. selbstleitend. Die Gate-Elektrode des Feldeffekttransistors 7 ist sowohl über den Widerstand an den Anschluß B als auch über den Widerstandsstromzweig c an den Speisestrompfad b geführt. Der Widerstandsstromzweig c enthält eine Serienschaltung aus dem Widerstand 8 und dem als Arbeitskontakt ausgebildeten Kontakt u des Relais U. Die Gate-Elektrode des Feldeffekttransistors 7 ist ferner über die Z-Diode 11 an den Speisestrompfad b geführt. Die Z-Diode ist in bezug auf die Verbraucherspannung U2 in Sperrichtung gepolt. Die beiden Speiseschaltungen 1 und 2 sind Quellen eingeprägter Spannung und mit gleicher Polung an den Verbraucher 3 geführt, der durch einen oder mehrere Lastwiderstände gebildet sein kann.

Im Normalbetrieb ist die Speiseschaltung 1 aktiv. In diesem Zustand ist der Eingang der Speiseschaltung 1 über den Steckverbinder 13 an die Wechselspannungsquelle 12 angeschlossen. Der Ausgang der Speiseschaltung 1, die vorzugszweise ein auf konstante Ausgangsspannung geregelter und mit einer Vorrichtung zur Strombegrenzung versehener Umrichter ist, speist den Verbraucher 3 mit der Verbraucherspannung U2.

Der aktive oder nichtaktive Zustand der Speiseschaltung 1 wird durch das Relais U überwacht, das an den Eingang der Speiseschaltung 1 angeschlossen ist. An die Stelle dieses Relais U kann gegebenenfalls ein anderer Spannungssensor, insbesondere ein Optokoppler, ein Transistor oder dergleichen treten.

Wird die Speiseschaltung 1 an ihrem Eingang mit Spannung versorgt, so wird das Relais U erregt und der Kontakt u geschlossen, so daß der Feldeffekttransistor 7 sperrt. Bei aktiver Speiseschaltung 1 wird der Verbraucher 3 daher nur aus dieser allein gespeist. Wird der Steckverbinder 13 geöffnet, so geht die Speiseschaltung 1 in den passiven Zustand über. In diesem Fall ist das Relais U nicht erregt und sein Kontakt u geöffnet. Der Feldeffekttransistor 7 befindet sich daher im leitenden Zustand. Der Verbraucher 3 wird somit aus der als Ersatzeinheit dienenden Speiseschaltung 2 gespeist.

Die zur ersatzweisen Speisung des Verbrauchers 3 dienende Speiseschaltung 2 ist in besonders einfacher Weise aufgebaut. Sie enthält den Transformator 5, dessen Primärwicklung 51 ständig mit einer Wechsel- oder Impulsspannung beaufschlagt wird. An die Sekundärwicklung 52 des Transformators 5 ist eine Serienschaltung aus der Gleichrichterdiode 4 und dem Speicherkondensator 6 angeschlossen. Der Speicherkondensator liegt zwischen den Anschlüssen A und C der Speiseschaltung 2, die selbst keine Vorrichtungen zur Strom- oder Spannungsbegrenzung enthält. An den Anschlüssen A und C liegt die Ausgangsspannung U1 der Speiseschaltung 2.

Der Feldeffekttransistor 7 der Schaltvorrichtung wird in vorteilhafter Weise zugleich zur Strom- und zur Spannungsbegrenzung ausgenutzt. Zur Strombegrenzung dienen die Widerstände 9 und 10. Die Z-Diode 11, die zwischen der Gate-Elektrode des Feldeffekttransistors 7 und dem Speisestrompfad b angeordnet ist, bewirkt eine Begrenzung der Verbraucherspannung U2. Die Z-Diode 11 ist so gepolt, daß sie für die Verbraucherspannung U2 in Sperrichtung gepolt ist.

Bei geschlossenem Kontakt u bilden die Widerstände 8 und 10 einen Spannungsteiler, der die Verbraucherspannung U2 teilt und dessen Abgriff mit der Gate-Elektrode des Feldeffekttransistors 7 verbunden ist. Dieser Spannungsteiler ist bei gesperrter Z-Diode 11 als solcher wirksam. Bei leitender Z-Diode 11 dagegen werden Erhöhungen der Verbraucherspannung U2 ohne Teilung auf den Widerstand 10 übertragen, so daß sie sich voll und ganz auf die Source-Gate-Spannung des Feldeffekttransistors 7 auswirken. Auf diese Weise wird eine wirksame Begrenzung der Verbraucherspannung U2 erzielt.

Die Schaltungsanordnung bewirkt mit geringen Schaltungsaufwand, daß die Ausgangsspannung U1 der Speiseschaltung 2 bei Ausfall der Speiseschaltung 2 selbsttätig an den Verbraucher 3 geschaltet wird. Der dabei vom Anschluß A nach Anschluß B fließende Strom ist in seiner Höhe begrenzt. Die Schalteinrichtung bezieht im Bereitschaftszustand, d. h. bei Lieferung der Verbraucherspannung U2 durch die Speiseschaltung 1 keine Leistung aus der Speiseschaltung 2. Die Schaltungsanordnung läßt sich vorteilhaft in Geräten zur Speisung von Einrichtungen der elektrischen Nachrichtenübertragungstechnik verwenden.

## Patentansprüche

1. Schaltungsanordnung zur wahlweisen Speisung eines Verbrauchers (3) mittels einer von zwei Speiseschaltungen (1, 2), die mit gleicher Polung an den Verbraucher (3) geführte Spannungsquellen sind, wobei zwischen einer der Speiseschaltungen (2) und dem Verbraucher (3) eine Schaltvorrichtung mit einem in einem der beiden Speisestrompfade (a, b) liegenden Feldeffekttransistor (7) angeordnet ist, dessen Gateelektrode über einen einen Widerstand (8) und einen Schalter (u) enthaltenden und an den anderen der beiden Speisestrompfade (b) geführten Widerstandsstromzweig (c) mit einem Steuerpotential beaufschlagbar ist, wobei der Schalter in Abhängigkeit vom aktiven oder inaktiven Zustand der anderen Speiseschaltung (1) derart leitend oder gesperrt und das Steuerpotential derart gewählt ist, daß der Feldeffekttransistor (7) im aktivierten Zustand der anderen Speiseschaltung (1) gesperrt und im nichtaktivierten Zustand der anderen Speiseschaltung (1) leitend ist,
**dadurch gekennzeichnet,**
daß der Feldeffekttransistor vom selbstleitenden Typ ist und daß der Schalter im Widerstandsstromzweig (c) der Schaltvorrichtung, der an ein den Feldeffekttransistor (7) sperrendes Potential geführt ist, ein bei aktiver anderer Speiseschaltung (1) leitender und bei passiver anderer Speiseschaltung (1) gesperrter Schalter (u) ist und daß in Serie zur Gate-Source-Strecke des Feldeffekttransistors (7) auf Seiten der Sourceelektrode des Feldeffekttransistors (7) ein erster Widerstand (9) angeordnet ist und daß parallel zu der aus der Gate-Source-Strecke des Feldeffekttransistors (7) und dem ersten Widerstand (9) gebildeten Serienschaltung ein zweiter Widerstand (10) liegt.

2. Schaltungsanordnung nach Anspruch 1,
**dadurch gekennzeichnet,**
daß bei Ausbildung der einen Speiseschaltung (2) als Wechselspannungsquelle (Transformator 5) mit daran angeschlossener Gleichrichterschaltung (4) und nachfolgendem Speicherkondensator (6) parallel zu dem zwischen der Gateelektrode des Feldeffekttransistors (7) und dem anderen der beiden Speisestrompfade (b) gelegenen Widerstandsstromzweig (c) eine für die Verbraucherspanung (U2) in Sperrichtung gepolte Z-Diode angeordnet ist.

3. Schaltungsanordnung nach Anspruch 1 oder 2,
**dadurch gekennzeichnet,**
daß der im Widerstandsstromzweig (c) der Schaltvorrichtung angeordnete Schalter (u) durch einen Spannungssensor (Relais U) steuerbar ist, der an den Eingang der anderen Speiseschaltung (1) angeschlossen ist und daß bei der anderen Speiseschaltung (1) im nichtaktivierten Zustand der Eingang vom Ausgang voneinander entkoppelt ist.

## Claims

1. Circuit arrangement for selectively feeding a load (3) by means of one of two feeding circuits (1, 2) which are voltage sources conducted with equal polarisation to the load (3), a switching device with a field-effect transistor (7) located in one of the two feed current paths (a, b) being arranged between one of the feed circuits (2) and the load (3), to the gate electrode of which field-effect transistor a control potential can be applied via a resistance current branch (c) containing a resistor (8) and a switch (u) and being conducted to the other one of the two feed current paths (b), the switch being conducting or blocked in dependence on the active or inactive state of the other feed circuit (1) in such a manner, and the control potential being selected in such a manner that the field-effect transistor (7) is cut off in the activated state of the other feed circuit (1) and conducting in the non-activated state of the other feed circuit (1), characterised in that the field-effect transistor is of the normally conducting type and that the switch in the resistance current branch (c) of the switching device, which is conducted to a potential cutting off the field-effect transistor (7), is a switch (u) which is conducting with an active other feed circuit (1) and blocked with a passive other feed circuit (1) and in that a first resistor (9) is arranged in series with a gate-source path of the field-effect transistor (7) on the side of the source electrode of the field-effect transistor (7) and in that a second resistor (10) is connected in parallel with the series circuit formed from the gate-source path of the field-effect transistor (7) and a first resistor (9).

2. Circuit arrangement according to Claim 1, characterised in that if one feed circuit (2) is constructed as alternating-voltage source (transformer 5) with rectifier circuit (4) connected thereto and subsequent storage capacitor (6), a Z diode reversely polarized for the load voltage (U2) is arranged in parallel with the resistance current branch (c) located between the gate electrode of the field-effect transistor (7) and the other one of the two feed current paths (b).

3. Circuit arrangement according to Claim 1 or 2, characterised in that the switch (u) arranged in the resistance current branch (c) of the switching device can be controlled by a voltage sensor (relay U) which is connected to the input of the other feed circuit (1) and in that in the other feed circuit (1), the input is decoupled from the output in the non-activated state.

## Revendications

1. Montage pour alimenter, au choix, une charge (3) au moyen d'un parmi deux circuits d'alimentation (1, 2) qui sont des sources de tension appliquées avec la même polarité à la charge (3), du type dans lequel, entre l'un des circuits d'alimentation (2) et la charge (3), est monté un dispositif de commutation comportant un transistor à effet de champ (7) qui se situe dans une des deux voies d'alimentation en courant (a, b) et dont l'électrode de grille est susceptible d'être portée à un potentiel de commande, par l'intermédiaire d'une branche résistive (c), qui compcorte une résistance (8) et un interrupteur (u), et qui est reliée à la seconde (b) des deux voies d'alimentation en courant, l'interrupteur étant, en fonction de l'état actif ou inactif de l'autre circuit d'alimentation (1), rendu passant ou bloqué, et le potentiel de commande étant choisi de telle sorte, que le transistor à effet de champ (7) est bloqué pour l'état actif de l'autre circuit d'alimentation (1) et est passant pour l'état inactif de l'autre circuit d'alimentation (1),
caractérisé en ce que,
le transistor à effet de champ est de type à autoconductibilité, et que l'interrupteur situé, dans la branche résistive (c) du dispositif de commutation qui est placée à un potentiel bloquant le transistor à effet de champ (7), est un interrupteur (u) qui est fermé lorsque ledit autre circuit d'alimentation (1) est actif, et qui est ouvert lorsque ledit autre circuit d'alimentation (1) est passif, qu'en série avec la section grille-source du transistor à effet de champ (7), et du côté électrode de source du transistor à effet de champ (7), est prévue une première résistance (9), et qu'en parallèle avec le circuit série constitué de la section grille-source du transistor à effet de champ (7) et de la première résistance (9), est montée une deuxième résistance (10).

2. Montage suivant la revendication 1,
caractérisé en ce que, dans le cas de la réalisation du premier circuit d'alimentation (2) comme source de tension alternative (transformateur 5) à circuit redresseur (4) qui lui est relié et à condensateur d'accumulation d'énergie aval (6), il est prévu, en parallèle avec la branche résistive (c) située entre l'électrode de grille du transistor à effet de champ (7) et l'autre des deux voies d'alimentation en courant (b), une diode Z polarisée en inverse pour l'alimentation de la charge (U2).

3. Montage suivant la revendication 1 ou 2,
caractérisée en ce que l'interrupteur (u) monté dans la branche résistive (c) du dispositif de commutation, est susceptible d'être commandé par un détecteur de tension (relais U), qui est relié à l'entrée dudit autre circuit d'alimentation (1), et que, dans ledit autre circuit d'alimentation (1), dans l'état inactif, l'entrée et la sortie sont découplées l'une de l'autre.
